# EUROPEAN PATENT APPLICATION

(11) **EP 1 650 230 A1**
(43) Date of publication of application: **26.04.2006**
(21) Application number: 04105217.6
(22) Date of filing: 21.10.2004
(51) Int. Cl.: C08F 10/00, C08F 4/658, C08F 4/70

(54) **Polyolefins prepared from Ziegler-Natta and metallocene catalyst components in single reactor**

(71) Applicant: TOTAL PETROCHEMICALS RESEARCH FELUY, 7181 Seneffe (Feluy) (BE)
(72) Inventor: Razavi, Abbas, 7000 Mons (BE)
(74) Representative: Leyder, Francis

(57) **Abstract**

The present invention discloses a metallocene catalyst system for producing polyolefins comprising:
A. a Ziegler-Natta catalyst component;
B. one or more metallocene or post-metallocene components;
C. an actvating agent having an ionising action for the metallocene catalyst component, having low or no co-ordinating capability and having no poisoning action on the Ziegler-Natta component.

## Description

The present invention relates to a catalyst system comprising a Ziegler-Natta component and a metallocene-based catalyst component for use in the preparation of polyolefins having a broad or multi-modal molecular weight distribution. The invention further relates to a process for the polymerisation of olefins using the catalyst system.

Polyolefins such as polyethylenes which have high molecular weight generally have high melt strength and improved mechanical properties over their lower molecular weight counterparts. However, high molecular weight polyolefins can be difficult to process and are more costly to extrude.

Imparting potentially antagonistic properties such as easy processing and high melt strength, rigidity and toughness to high performance polyolefin resins has always posed serious challenges to scientists and engineers. It requires quite ingenious catalyst formulations and process-engineering design. Modern multi reactor, cascade process technologies employing state of the art catalysts have been used in an attempt to overcome the challenge. By judiciously controlling the conditions in each reactor, such as precise control of reactant concentrations, catalyst's residence time, and polymer block ratios, they enable sequential and in-situ production of polymer blends with intermingled chains of distinctly different lengths and compositions. In these so-called bimodal resins a compromise of counteracting properties may be reached.

Cascade reactor technologies comprise in majority two stirred tank slurry reactors, two slurry loop reactors or two gas phase reactors in series. Processes also exist wherein a combination of a loop and a fluidised bed gas phase reactor is employed.

Reactor design, configuration, and conditions governing different cascade processes are quite different and may vary substantially from process to process. They all have however one distinct feature: they ensure, in one of the in series configured reactors, the production of a high density low molecular mass polymer component and in the other reactor, the production of a high molecular mass low density polymer fraction. Major challenges in all varieties of cascade technologies are:
1. Frictionless, unidirectional transfer of monomer, diluents and product from the first reactor to the second reactor, to avoid reactors cross contamination.
2. Perfectly synchronized catalysts life and residence times to ensure intimate polymer intermixing and homogenisation.
Additionally it is desired that the final bimodal exhibit well defined melt flow and density.

Each cascade technology has its own specificity.
- The stirred tank slurry process employs gaseous monomer, ethylene with hexane as the preferred solvent as disclosed for example in Boehm (J. Appl. Polym. Sci., 22, 279, 1984). Along with catalysts and co-catalyst hydrogen is fed into the first reactor to reduce the molecular mass in the first stage and butene is introduced into the second reactor to lower the density. The stirred tank technologies have simplified reactor design and are easy to operate. The low monomer partial pressure and long residence times require, however, very high catalysts activities and life times.
- In two slurry loop cascade processes, ethylene with a combination of butene/hexane or hexene/isobutane as co-monomer/solvent pair can be used. The reactors residence times are shorter and catalysts with moderate activities are tolerated. The major challenge in this type of processes is to prevent excess H₂ or co-monomer to enter into the next reactor.
- A slurry loop reactor may be combined with a fluidised bed gas phase reactor as disclosed by Borealis. The first stage, loop reactor, insures rapid start up of the production. It uses propane in supercritical phase as diluent with the advantage of introducing a large quantity of hydrogen for the production of low molecular mass fraction without the risk of H₂ bubble formation and reactor pressure instability. Additionally, polymer dissolution and reactor fouling issues are eliminated due to low solubility in propane whose critical temperature remains below polymer's melting point. The second stage, the gas phase reactor provides good density regulation and excellent product flexibility.

Ziegler-Natta catalysts are predominantly used in cascade technologies. They fulfil conditions, such as moderate to high activities, good hydrogen response and co-monomer incorporation capability imposed by the cascade process. Their good thermal and chemical stability guarantees that they survive the relatively long overall residence times of the reactors. They produce however short polymer chains in the high molecular weight low-density fraction that remain in the amorphous phase, and do not contribute to tie molecules formation. Additionally, the branch rich, non-crystallisable low molecular weight material generally leads to de-mixing and phase separation and is not favourable to mechanical properties.

Single site catalysts in general and metallocenes in particular are ideally suited to be used in cascade technologies for the production of both fractions of bimodal polyethylene. Selected bridged metallocene catalysts with excellent hydrogen response and co-monomer incorporation capabilities allow the easier production of the bimodal polyethylene without excessive use of hydrogen and co-monomer, and therefore with little or no risk of the second reactor contamination. Their application is particularly advantageous since their narrow disperse polymers, permit precise design of the composition of each fraction particularly that of the low density, high molecular mass fraction. In metallocene based copolymer the branches are statistically distributed and are very effective in assisting tie molecule formation and preventing chains longitudinal diffusion and lateral slippage.

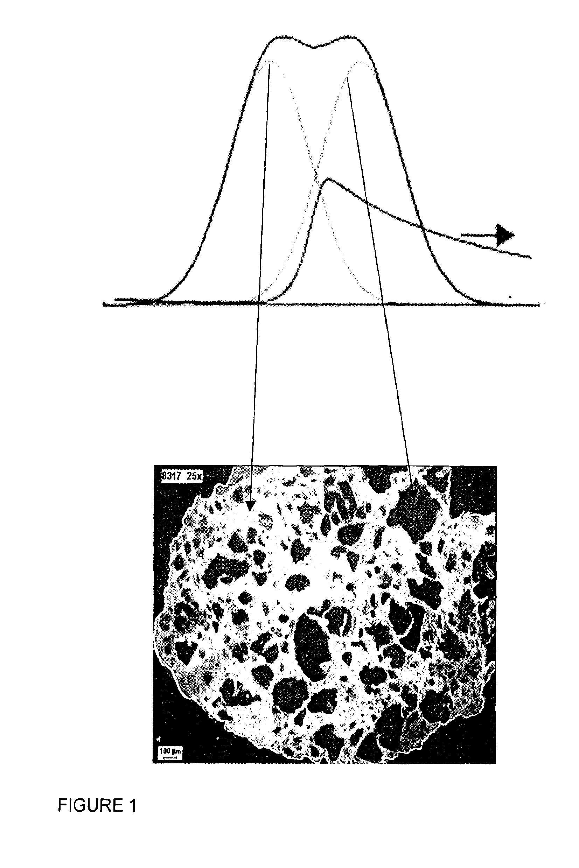

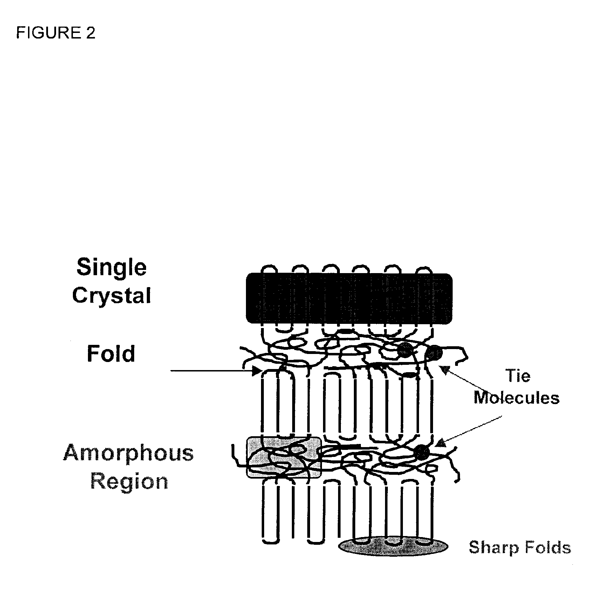

In cascade processes, polymer particle formation starts with catalyst particles being gradually fragmented by infused layers of high density and low-density polymer fractions in tandem reactors to finally become polymer particles. The solid-state morphology of the resulting polyethylene is that of a biphasic polymer alloy, in which the high-density, homo-polymer component acts as the matrix for the low-density copolymer part as can be seen in Figure 1. The high molecular mass copolymer chains traverse several crystalline and amorphous layers and interconnect adjacent crystalline lamellae as tie molecules. Tie molecules density is directly related to the chain length, molecular weight distribution (MWD), number and type of the side branches and the semi-crystalline morphology for a given lamellar thickness. They determine material's long- and short-term resistance to environmental and/or mechanical stress. In bimodal systems, the crystalline domain defines low strain rate of semi-crystalline polymers such as modulus, yield stress and slow crack growth properties whereas the amorphous region determines the high strain properties such as impact, tear and fracture resistance. The concentration of the tie molecules determines both the low and high strain rate behaviour. A high concentration of tie molecules can prevent or stop for example the brittle failure that is occasionally initiated, even at low stress, by a small crack and formation of a crazing zone. The crazing zone is formed by highly oriented fibrils under the applied stress concentration and is postulated to be due to disentanglement of tie molecules connecting the micro crystallites and fracture of the fibril. The resistance to fracture is thought to improve by incorporation of various types of branches the long branches being more effective. Branches are predominantly concentrated on tie-molecules that resist the chain pull out through the formation of micro-fibrils: they impede slow crack growth by reducing lamellar thickness and by decreasing the susceptibility to craze initiation and development. Branches also serve to pin-down tie molecules, which are a priori less mobile than their linear counterparts. The pinning of branches at the crystal fold surface and represented in Figure 2 is thought to be responsible for the very high fracture toughness of low density polyethylene (LDPE). High fracture toughness is achieved in the longest branched chains that form tie-molecules. It is also equally important to optimise fracture toughness by regularly spacing the branches, as for example in low-density polyethylene produced with metallocene. The inter branch spacing sets the upper boundary to the effective molecular weight for tie-molecules.

The only disadvantage of using single site catalysts in cascade processes to produce bimodal polyolefin is the difficult homogenised extrusion due to very narrow molecular weight distribution of the two polymer fractions and to the lack of overlapping consisting of chains with intermediate molecular weight distribution. This is caused by non-ideadl residence time distribution, which is independent of the catalytic system in use and causes some catalyst grains to leave the firtst reactor without any polymerisation and some catalyst grains to stay too long to be solely covered with a single fraction. The only remedy for this problem is the use of dual (or multiple) site catalysts in a single reactor. In this case each catalyst particle will have the compositional ratio of the low and high molecular weight fractions that was pre-designed by the composition of its individual active sites. The close proximity of the two fractions makes the homogeneous extrusion possible.

Production of polyolefin with a bimodal MWD in a single reactor has long been a goal of the polyolefin industry because single reactor configurations are significantly cheaper to build, have improved operability, and enable quicker product transitions than multi-reactor configurations. A single reactor can also be used to produce a broader range of products than can a set of cascaded reactors. Producing a resin having a bimodal MWD in a single reactor requires however highly sophisticated catalytic systems with at least two very different active site populations. It was thought that metallocenes, with their vast structural diversity, could provide highly chemo-selective active site structures with distinctly different hydrogen and co-monomer response and thereby provide a facile route to dual site catalysts. The area of dual site single reactor systems has been the object of a lot of efforts by the present applicant such as disclosed for example in US-A-6255428, EP-A-0790259, US-A-6410476, WO/03029302, US-A-6380311, US-A-5914289, EP-A-830395, or US-a-5719241. The method however still needs much improvement.

### List of Figures.

Figure 1 represents the molecular weight distribution of a bimodal polyethylene resin and its relation to the dispersion of the low density fraction, represented by the dark areas, in the high density matrix, represented by the light areas.
Figure 2 is a schematic representation of semi-crystalline polyethylene.
Figure 3 represents the log/log curve of stress as a function of time for a bimodal polyethylene, showing the transition between ductile and brittle behaviours.

Many applications still require improved polyolefins and there is still a need to control the molecular weight distribution of the polyolefin products more closely, so that the extrusion of the polyolefin components can be improved to obtain a more homogeneous product, and thus the optical, mechanical and processing properties of the polyolefins. In particular it is desirable to improve the catalyst system employed in the manufacture of multimodal polyolefins, in order to achieve these improvements in the polymers themselves.

It is an object of the present invention to solve the problems associated with the above prior art by providing an improved catalyst system.

It is also an object of the present invention to provide an improved method for the formation of olefin polymers, employing new catalyst systems.

It is another object of the present invention to produce catalyst systems capable of preparing polyolefins with broad, bi- or multi-modal molecular weight distribution. preferably in a single reactor.

It is further object of the present invention to produce catalyst systems capable of preparing polyolefins with a high molecular weight fraction and a low molecular weight fraction.

It is yet another object of the present invention to provide a catalyst system comprising a catalyst component that has a very high comonomer incorporation to prepare the high molecular weight fraction of the polyolefin and a catalyst component that has a good hydrogen response to prepare the low molecular weight fraction of the polyolefin.

Accordingly, the present invention discloses an active catalyst system comprising:
- a Ziegler-Natta catalyst component;
- one or more metallocene or new single site catalyst components;
- an activating agent having an ionising action for the metallocene catalyst component, having low or no co-ordinating capability, said activating agent and Ziegler-Natta (ZN) component having no mutual poisoning or deactivation action;
- an aluminium alkyl component acting as alkylating agent for the metallocnen or new single site component and acting as cocatalysts for the ZN componenent.

The Ziegler-Natta catalyst preferably consists of a transition metal component (compound A), which is for example the reaction product of an organomagnesium compound with a titanium compound, and of an organoaluminium component (compound B).

As transition metal compounds suitable for the preparation of compound A, there are used tetravalent halogenated titanium compounds, preferably titanium compounds of the general formula TiXₙ(OR)₄₋ₙ in which n is 1 to 4, X stands for chlorine or bromine, and R for identical or different hydrocarbon radicals, especially straight-chain or branched alkyl groups having 1 to 18, preferably 1 to 10, carbon atoms.

Examples thereof are:

TiCl₄, Ti(OC₂H₅)₂Cl₂, Ti(OC₂H₅)₃Cl, Ti(OC₃H₇)₂Cl₂, Ti(OC₃H₇)₃Cl, Ti(OiC₃H₇)₂Cl₂, Ti(OiC₃H₇)₃Cl, Ti(OiC₄H₉)₂Cl₂, Ti(OiC₄H₉)₃Cl

In some cases, it may be advantageous to prepare the halogeno-ortho-titanic acid esters of the above formula in situ by reacting the respective ortho-titanic acid ester with TiCl₄ in a corresponding proportion.

This reaction is advantageously carried out at temperatures of from 0 to 200°C, the upper temperature limit being determined by the decomposition temperature of the tetravalent halogenated titanium compound used; it is advantageously carried out at temperatures of from 60 to 120°C.

The reaction may be effected in inert diluents, for example aliphatic or cycloaliphatic hydrocarbons as are currently used for the low pressure process such as butane, pentane, hexane, heptane, cyclohexane, methyl-cyclohexane as well as aromatic hydrocarbons, such as benzene or toluene; hydrogenated Diesel oil fractions which have been carefully freed from oxygen, sulphur compounds and moisture are also useful.

Subsequently, the reaction product of magnesium alcoholate and tetravalent halogenated titanium compound which is insoluble in hydrocarbons is freed from unreacted titanium compound by washing it several times with one of the above inert diluents in which the titanium-(IV)-compound used is readily soluble.

For preparing compound A, magnesium alcoholates, preferably those of the general formula Mg(OR)₂ are used, in which R stands for identical or different hydrocarbon radicals, preferably straight-chain or branched alkyl groups having 1 to 10 carbon atoms; magnesium alcoholates having alkyl groups from 1 to 4 carbon atoms are preferred. Examples thereof are Mg(OCH₃)₂, Mg(OC₂H₅)₂, Mg(OC₃H₇)₂, Mg(Oic₃H₇)₂, Mg(OC₄H₉)₂, Mg(OiC₄H₉)₂, Mg(OCH₂-CH₂-C₆H₅)₂.

The magnesium alcoholates can be prepared by known methods, for example by reacting magnesium with alcohols, especially monohydric aliphatic alcohols.

Magnesium alcoholates of the general formula X-Mg-OR in which X stands for halogen, (SO₄)_{½} carboxylate, especially acetate of OH, and R has the above composition, may also be used.

These compounds are, for example, obtained by reacting alcoholic solutions of the corresponding anhydrous acids with magnesium.

The titanium contents of compound A may be within the range of from 0.05 to 10mg.-atom, per gram of compound A. It can be controlled by the reaction time, the reaction temperature and the concentration of the tetravalent halogenated titanium compound used.

The concentration of the titanium component fixed on the magnesium compound is advantageously in the range of from 0.005 to 1.5mmol, preferably from 0.03 to 0.8mmol, per litre of dispersing agent or reactor volume. Generally, even higher concentrations are possible.

The organo-aluminium compounds used may be reaction products of aluminium-trialkyl or aluminium -dialkyl hydrides with hydrocarbon radicals having 1 to 16 carbon atoms, preferably Al(iBu)₃ or Al(iBu)₂H and diolefins containing 4 to 20 carbon atoms, preferably isoprene; for example aluminium isoprenyl.

Furthermore, suitable as compound A are chlorinated organo-aluminium compounds, for example dialkyl-aluminium monochlorides of the formula R₂AlCl or alkyl-aluminium sesquichlorides of the formula R₃Al₂Cl₃, in which formulae R stands for identical or different hydrocarbon radicals, preferably alkyl groups having 1 to 16 carbon atoms, preferably 2 to 12 carbon atoms, for example (C₂H₅)₂AlCl, (iC₄H₉)₂AlCl, or (C₂H₅)₃Al₂Cl₃.

It is advantageous to use, as compound B, aluminium-trialkyls of the formula AIR₃ or aluminium-dialkyl hydrides of the formula AIR₂H, in which formulae R stands for identical or different hydrocarbons, preferably alkyl groups having 1 to 16, preferably 2 to 6, carbon atoms, for example Al(C₂H₅)₃, Al(C₂H₅)₂H, Al(C₃H₇)₃, Al(C₃H₇)₂H, Al(iC₄H₉)₃, or Al(iC₄H₉)₂H.

The organoaluminium may be used in a concentration of from 0.5 to 10mmol per litre of reactor volume.

More preferably the Ziegler-natta catalyst is prepared with a diether and has a good hydrogen response.

The metallocene catalyst components according to the present invention have a structure according to the formula:

Rs" (CpRₙ) (CpRₙ) M Q₂

or to the formula

Rₛ" (CpRₙ) X M Q₂

wherein
- each Cp is a substituted or unsubstituted cyclopentadienyl ring;
- each R is the same or different and is hydrogen or a hydrocarbyl radical such as alkyl, alkenyl, aryl, alkylaryl or arylalkyl radical containing from 1 to 20 carbon atoms or two carbon atoms are joined together to form a C4-C6 ring;
- R" is a structural bridge between two Cp rings;
- M is a metal group 4 of the Periodic Table;
- X is a metal group 13 of the Periodic Table;
- Q is a hydrocarbyl radical such as aryl, alkyl, alkenyl, alkylaryl or arylalkyl radical having from 1 to 20 carbon atoms, a hydrocarboxy radical having from 1 to 20 carbon atoms or a halogen and can be the same or different from each other;
- s is equal to 0 or 1.

By substituted, it is meant that any of the positions on the cyclopentadienyl derivative may comprise a substituent in place of a hydrogen atom. This may be either within the five-membered cyclopentadienyl ring or, if the ligand is for example an indenyl, a tetrahydroindenyl or a fluorenyl, this may be on a carbon atom in the ring system outside of the five-membered ring.

Each catalyst component comprises two cyclopentadienyl derivatives that may be the same or different.

The particular cyclopentadienyl ligands on the metallocene catalyst lead to the advantage of the present invention.

In the present invention, the type of cyclopentadienyl derivative is not especially limited. Thus, in preferred embodiments of the present invention, the Cp's may be independently selected from cyclopentadienyl-type groups, indenyl-type groups and fluorenyl-type groups. In the present disclosure, cyclopentadienyl-type group is meant to be a single substituted or unsubstituted cyclopentadienyl ring system and not a fused ring system such as indenyl or fluorenyl systems.

The type of bridge present between the ligands in the present catalyst component is not particularly limited. Typically R" comprises an alkylidene group having from 1 to 20 carbon atoms, a germanium group (e.g. a dialkyl germanium group), a silicon group (e.g. a dialkyl silicon group), a siloxane group (e.g. a dialkyl siloxane group), an alkyl phosphine group or an amine group. Preferably, the substituent on the bridge comprises a hydrocarbyl radical having at least one carbon, such as a substituted or unsubstituted ethylenyl radical, for example ―CH₂-CH₂- (Et). Most preferably R" is Et or Me₂Si.

Q is preferably a halogen and most preferably it is Cl.

M is preferably a metal group 4 of the Periodic Table, more preferably it is hafnium or titanium and most preferably, it is hafnium.

X is preferably nitrogen.

The substituent or substituents present on the ligands are not particularly limited. If there is more than one substiutent, they can be the same or different. Typically, they are independently selected from an hydrocarbyl group having from 1 to 20 carbon atoms. Amongst the preferred substituents, one can cite methyl (Me) groups, phenyl (Ph), benzyl (Bz), naphtyl (Naph), indenyl (Ind), benzendyl (Bzlnd), as well as Et, n-propyl (n-Pr), iso-propyl (I-Pr), n-butyl (n-Bu-, tert-butyl (t-Bu), silane derivatives (e.g. Me₃Si), alkoxy preferably given by the formula R-O where R is an alkyl having from 1 to 20 carbon atoms, cycloalkyl and halogen. Preferably there are at most two substituents on each Cp ring.

The position of the substituent or substituents on the ligands is not particularly limited. The ligands may thus have any substitution pattern including unsubstituted or fully substituted. However, when Cp is a cyclopentadienyl-type group, the substituents are preferably in the 3- and/or 5- positions or in the 2- and/or 4-positions. When Cp is a fluorenyl-type group, the substituents are preferably in the 3- and/or 6- positions or in the 2- and/or 7- positions. When Cp is an indenyl-type group, the substituents are preferably in the 2- and/or 4- positions.

In another embodiment according to the present invention, the metallocene catalyst component may be described by the formula

R"(CpRn)M X Q₂ (II)

wherein R", Cp, Rn, M and Q have already been defined and wherein X is an hetero atom ligand with one or two lone pair electrons and selected from the group 15 or 16. Preferably, X is nitrogen, phosphorus oxygen or sulfur and it can be substituted or unsubstituted.

In a preferred embodiment according to the present invention, the Ziegler-Natta catalyst component is prepared with a diether and is used to prepare the low molecular weight fraction of the polymer because of its good response to hydrogen. The metallocene catalyst component is a hafnocene and it is used to prepare the high molecular weight fraction of the polymer because of its good comonomer incorporation.

Alternatively, the other one or more catalyst component(s) can be a new single site catalyst component given by formula III

(L) ₙM'(Q')ₚ (III)

wherein L is an heteroatom-containing ligand, M' is selected from Ti, Zr, Sc, V, Cr, Fe, Co, Ni, Pd or a lanthanide metal, each Q is independently a hydrocarbon having from 1 to 20 carbon atoms or a halogen, p is the valence of M' minus the coordination number of L and such as described for example in Britovsek et al. (Britovsek, G.J.P., Gibson, V.C., Kimberley, B.S., Maddox, P.J., McTavish, S.J., , Solan, G.A., White, A.J.P. and Williams, D.J., in J. Chem. Coc., Chem. Commun., 849, 1999.). These new catalyst components include iron and cobalt complexes of the 2,6-bis(imino)pyridyl ligand, comprising two 2,6-diisopropylaniline groups linked to a 2,6-substituted pyridine group, thus forming a tridentate ligand. The substituents on the two diisopropylaniline groups can be the same or different and typically, they can be selected from hydrogen, methyl or iso-propyl, preferably they all are methyl. Preferably, the metal is iron because the complexes based on iron do not incorporate the comonomer, thereby producing a polyolefin of high crystallinity. In addition, the comonomer reacts with the iron-based complexes as a chain transfer thereby favouring formation of a very low molecular weight fraction.

The catalyst system of the present invention comprises one Ziegler-Natta catalyst component and at least one other metallocene or new single site catalyst component preferably, a nickel-based complex. It comprises, in addition to the above catalyst components, one or more activating agents having an ionising action and capable of activating the metallocene catalyst component(s) without poisoning the Ziegler-Natta catalyst component. The activating agents of the present invention are selected from spherically-shaped anionogenic agents that can distribute the negative charge evenly and that have a low or no co-ordinating capability. Preferably, they are selected from borates, boranes and aluminates or mixtures thereof.

Suitable boron-containing compounds activating agents may comprise triphenylcarbenium boronate, such as tetrakis-pentafluorophenyl-borato-triphenylcarbenium as described in EP-A-0,427,696

C (Ph)₃⁺ B(C₆F₅)₄⁻

These activators are highly effective for olefin polymerisation. Functionalised fluoroarylborate salts are preferred as they have improved solubility in hydrocarbons and improved thermal stability while keeping an excellent efficiency for olefin polymerisation.

Other suitable boron-containing activating agents are described in EP-A-0,277,004. They can be represented by the general formula:

[L'-H]⁺ [BAr₁Ar₂X₃X₄]⁻

wherein L' is a neutral Lewis base, H is a hydrogen atom, [L'-H]⁺ is a Bronsted acid, B is boron in a valence state 3, Ar₁ and Ar₂ are the same or different and are aromatic or substituted aromatic hydrocarbon radicals containing from 6 to 20 carbon atoms and may be linked to each other through a stable bridging group, and X₃ and X₄ are radicals selected independently from the group consisting of hydride radicals, halide radicals, with the proviso that only X₃ or X₄ will be halide at the same time, hydrocarbyl radicals containing from 1 to 20 carbon atoms, substituted hydrocarbyl radicals containing from 1 to 20 carbon atoms, wherein one or more of the hydrogen atoms is replaced by a halogen atom, hydrocarbyl-substituted metal radicals wherein each hydrocarbyl substitution contains from 1 to 20 carbon atoms and wherein the metal is selected from group 14 of the Periodic Table of the Elements.

Suitable aromatic radicals Ar₁ and Ar₂ may include phenyl, naphtyl or anthracenyl radicals, and suitable substituents on the aromatic radicals may include hydrocarbyl radicals, organometalloid radicals, alkoxy radicals, alkylamido radicals, fluoro- and fluoro-hydrocarbyl radicals and radicals such as those that can be useful as X₃ and X₄. The substituents may be ortho-, meta- or para-, relative to the carbon atom bonded to the boron atom.

When either or both X₃ and X₄ are hydrocarbyl radical(s), each may be the same or a different aromatic or substituted aromatic radical, the same or a different straight or branched alkyl, alkenyl or alkynyl radical having from 1 to 20 carbon atoms, the same or a different cyclic hydrocarbon radical having from 5 to 8 carbon atom, or an alkyl-substituted cyclic hydrocarbon having from 6 to 20 carbon atoms, the same or a different alkoxy or dialkylamido radical wherein the alkyl portion has from 1 to 20 carbon atoms, the same or different hydrocarbyl radicals or organometalloid radicals having from 1 to 20 carbon atoms.

Ar₁ and Ar₂ may be linked to one another. In addition, either or both of Ar₁ and Ar₂ may be linked to either X₃ or X₄ and X₃ and X₄ may be linked to one another through a suitable bridging group.

Boron compounds which may be used in the present invention include trialkyl-substituted ammonium salts such as for example triphenylammonium tetra(phenyl)boron, tripropylammonium tetra(phenyl)boron, tri(n-butyl)ammonium tetra(phenyl)boron, trimethylammonium tetra(p-tolyl)boron, trimethylammonium tetra(o-tolyl)boron, tributylammonium tetra(pentafluorophenyl)boron, tripropylammonium tetra(o,p-dimethylphenyl)boron, tributylammonium tetra(m,m-dimethylphenyl)boron, tributylammonium tetra(p-trifluoromethylphenyl)boron, tri(n-butyl)ammonium tetra(o-tolyl)boron.

N,N-dialkyl anilium salts can be used, such as for example N,N-dimethylanilium tetra(phenyl)boron, N,N-diethylanilium tetra(phenyl)boron, N,N-2,4,6 pentamethylanilium tetra(phenyl)boron.

Dialkyl ammonium salts can be used such as for example di-(I-propyl)ammonium tetra(pentafluorophenyl)boron, dicyclohexylammonium tetra(phenyl)boron.

Triaryl phosphonium salts can be used such as for example triphenylphosphonium tetra(phenyl)boron, tri(methylphenyl)phosphonium tetra(phenyl)boron, tri(dimethylphenyl)phosphonium tetra(phenyl)boron.

The activation processes and structure-activity relationships of several activating agents such as (perfluoroaryl) boranes and aluminates are disclosed in Chen and Marks (Chen E.Y-X., Marks T.J., in "Cocatalysts for metal-catalysed olefin polymerisation: activators, activation processes, and structure-activity relationship.", Chem. Rev. ,100, 1391-1434, 2000.) The role of borane and aluminate activating agents for tuning cation-anion ion pair structure and reactivity is disclosed in Chen et al. (Chen E.Y-X., Metz M.V., Li L., Stern C., Marks T.J., in "Sterically encumbered (perfluoroaryl) borane and aluminate cocatalysts for tuning cation-anion ion pair structure and reactivity in metallocene polymerisation processes. A synthetic, structural, and polymerisation study.", J. Am. Chem. Soc., 120, 6287-6305, 1998.). These two publications demonstrate the weak coordination capability of these borane and aluminate compounds: they are thus very suitable for use as activating agent in the present invention.

In addition, one or more aluminium alkyls are used as cocatalyst for the Ziegler-Natta catalyst component. They are represented by the formula AlRₓ wherein each R is the same or different and is selected from halides or from alkoxy or alkyl groups having from 1 to 12 carbon atoms and x is from 1 to 3. Especially suitable aluminiumalkyl are trialkylaluminium, the most preferred being triisobutylaluminium (TIBAL).

The catalyst system may be employed in a solution polymerisation process, which is homogeneous, or a slurry process, which is heterogeneous. In a solution process, typical solvents include hydrocarbons having from 4 to 7 carbon atoms such as heptane, toluene or cyclohexane. In a slurry process it is necessary to immobilise the catalyst system on an inert support.

The Ziegler-Natta component is supported on a MgCl₂ support. The one or more metallocene component(s) can either be supported on the same support as the Ziegler-Natta component or on a different support. If the metallocene component is deposited on a different support, it is preferred to select a porous solid support such as talc, inorganic oxides and resinous support materials such as polyolefins. Preferably, the support material is an inorganic oxide in its finely divided form.

Suitable inorganic oxide materials that may be employed in accordance with this invention include group IIA, IIIA, IVA, or IVB metal oxides such as silica, alumina and mixtures thereof. Other inorganic oxides that may be employed either alone or in combination with the silica, or alumina are for example magnesia, titania or zirconia. Other suitable support materials comprise for example finely divided functionalised polyolefins such as finely divided polyethylene.

Preferably, the support is a silica support having a specific surface area of from 200 to 700 m²/g and a pore volume of from 0.5 to 3 ml/g.

The two or more catalyst components can be immobilised on the same support or on different supports.

The relative amounts of the Ziegler-Natta catalyst component and of the other one or more metallocene catalyst component(s) depend upon the desired properties of the final resin and upon the activity of each catalytic component. The amount of Ziegler-Natta component can range from 10 to 90 wt% of the total weight of the Ziegler-Natta and other metallocene catalyst components. For applications such as pipes, the amount of Ziegler-Natta component is typically of no more than 50 wt%, based on the weight of all catalyst components. The Ziegler-Natta and the metallocene components are added each according to their activity and according to the desired properties of the final product.

The amounts of activating agent and of total metallocene components usefully employed in the preparation of the catalyst system can vary over a wide range. When a boron-based activating agent is used, the amount of boron is near stoichiometric with respect to the total amount of metal present in the one or more metallocene catalyst components. The boron (B) to total metal (EM) ratio B/EM is in the range between 1: and 20:1, preferably, it is about 2:1.

The order of addition of the catalyst components and activating agent to the support material can vary. In accordance with a preferred embodiment of the present invention, the boron-based activating agent dissolved in a suitable inert hydrocarbon solvent is added to the support material slurried in the same or another suitable hydrocarbon liquid and thereafter the catalyst components are added to the slurry.

Preferred solvents include mineral oils and the various hydrocarbons which are liquid at reaction temperature and which do not react with the individual ingredients. Illustrative examples of the useful solvents include the alkanes such as pentane, iso-pentane, hexane, heptane, octane and nonane; cycloalkanes such as cyclopentane, cyclohexane, and aromatics such as benzene, toluene, ethylbenzene and diethylbenzene.

Preferably, the support material is slurried in toluene and the catalyst components and activating agent are dissolved in toluene prior to addition to the support material.

The present invention further discloses a process for preparing a catalyst system that comprises the steps of:
A. providing a first Ziegler-Natta catalyst component,
B. providing one or more metallocene catalyst components of the general formula

   Rs" (CpRn) (CpRn) M Q₂ (I)

   or of the general formula

   R"(CpRₙ) M X Q₂ (II)

   wherein
   - each Cp is a substituted or unsubstituted cyclopentadienyl ring;
   - each R is the same or different and is hydrogen or a hydrocarbyl radical such as alkyl, alkenyl, aryl, alkylaryl or arylalkyl radical containing from 1 to 20 carbon atoms or two carbon atoms are joined together to form a C4-C6 ring;
   - R" is a structural bridge between two Cp rings;
   - M is a metal group 4 of the Periodic Table;
   - Q is a hydrocarbyl radical such as aryl, alkyl, alkenyl, alkylaryl or arylalkyl radical having from 1 to 20 carbon atoms, a hydrocarboxy radical having from 1 to 20 carbon atoms or a halogen and can be the same or different from each other;
   - s is equal to 0 or 1;
   - X is an heteroatom ligand with one or two lone pair electrons and selected from the group 15 or 16, substituted or unsubstituted;
      or new single site catalyst component of general formula III

      (L)ₙM'(Q')ₚ (III)

      wherein L is an heteroatom-containing ligand, M' is selected from Ti, Zr, Sc, V, Cr, Fe, Co, Ni, Pd or a lanthanide metal, each Q is independently a hydrocarbon having from 1 to 20 carbon atoms or a halogen, p is the valence of M' minus the coordination number of L
C. providing an activating agent having an ionising action and capable of activating the one or more metallocene catalyst component(s), said activating agent being based on a spherically shaped anionogenic agent that can distribute the negative charge evenly and that has a low or no co-ordinating capability and said activating agent and said Ziegler-Natta component of step A having no mutual poisoning action;
D. providing an aluminium alkyl acting as alkylating agent for the metallocene or new single site component and acting as cocatalyst for the ZN component;
E. optionally providing an inorganic support.

The catalyst systems of the present invention can be used to produce polyolefins with broad or multimodal molecular weight distribution.

The metallocene, new single site and Ziegler-Natta components are selected according to the desired polymer properties.

For example in an embodiment according to the present invention for the preparation of multimodal polyethylene, the Ziegler-Natta catalyst component is prepared with a diether and has an very good hydrogen response: it is thus capable of producing the low molecular weight, high crystallinity fraction. In this embodiment, the additional metallocene catalyst component is preferably selected to have a good comonomer incorporation and the capability to produce the polymer fraction having a high molecular weight and a low crystallinity. A bridged hafnocene or constrained geometry titanocene are the most preferred single site components:
- a large opening angle of the structure, produced by a small bridge, allows an excellent comonomer incorporation;
- the electronic environment of the metal is favourable to prepare the high molecular weight low crystallinity fraction of the final polymer.

In the case of polypropylene, it is often desirable to prepare a stereospecific polymer. If a syndiotactic polypropylene is desired, the metallocene catalyst component preferably has Cs bilateral symmetry such as for example in the cyclopentadienyl-fluorenyl-type group. If an isotactic polypropylene is prepared, the metallocene catalyst component preferably has C1 or C2 symmetry such as for example in the indenyl-type group or an unsymmetrically substituted cyclopentadienyl-fluorenyl-type group.

In another preferred embodiment of the present invention the Ziegler-Natta catalyst component is prepared with a phthalate and has a poor hydrogen response and a good comonomer response: it is used to prepare the high molecular weight fraction of the final polymer. The metallocene component is then selected to produce the low molecular weight, high crystallinity fraction of the final polymer: it is characterised by a small opening angle in the structure and a good response to hydrogen. Unbridged metallocene structures produce good results. Alternatively, the low molecular weight, high density fraction may be prepared with an iron-based new single site component. A large amount of comonomer is necessary to produce the high molecular weight fraction with the ZN catalayst component and that excess comonomer also acts as chain transfer agent for the iron-based complex.

The present invention thus further discloses a process for the preparation of polyolefins having a broad, bi- or multi-modal molecular weight distribution comprising the steps of;
A. introducing into the reactor a catalyst system comprising:
   - a Ziegler-Natta catalyst component;
   - one or more metallocene or new single site catalyst components;
   - an activating agent having a low or no co-ordinating capability and having no poisoning action on the Ziegler-Natta catalyst component;
B. optionally injecting a cocatalyst into the reactor;
C. injecting into the reactor an olefin monomer and an optional co-monomer;
D. maintaining the reaction zone under polymerisation conditions;
E. extracting the desired polyolefin having a broad or multimodal molecular weight distribution.

The preferred comonomers are selected from octene, 3-methyl-1-pentene or 4-methyl-1-pentene.

The conditions employed for polymerisation are not particularly limited, provided they are sufficient to effectively polymerise the particular monomer used as a starting material. Preferably, polymerisation takes place in the presence of hydrogen and of an alkene co-monomer such as 1-butene or I-hexene. The polymerisation process is preferably carried out at a temperature of from 50 to 120°C, more preferably from 60 to 110°C, under an absolute pressure of 1 to 100 bar.

Optionally, pre-polymerisation can be carried out.

The polyolefins prepared according to the present invention have a broad, bi- or multi-modal molecular weight distribution with a large, medium or small molecular weight difference between the high and the low molecular weight fractions. Additionally, the high molecular weight fraction of the polyolefin typically has a density of from 0.9 to 0.945 g/cm³. The density is measured at 23 °C following the method of standard test ASTM D 1505. The low molecular weight fraction has a density of at least 0.950 g/cm³.

The molecular weight distribution is defined by the polydispersity index D that is the ratio Mw/Mn of the weight average molecular weight Mw to the number average molecular weight Mn, as determined by gel permeation chromatography (GPC). The molecular weight distribution typically ranges from 4 to 20.

In the method of the invention, the molecular weight distribution of the first polyolefin component overlaps with the molecular weight distribution of the second polyolefin component, thus forming a polymer product that has at least a bimobal molecular weight distribution.

Thus, the present invention utilises at least two catalyst components for producing at least two polymer components, each component forming part of the multimodal polymeric product. It is preferred that two catalysts are employed, and a bimodal polymer product is produced. However, the invention is not limited to bimodal products only, and multimodal polymers may be produced if desired.

In a particularly preferred embodiment of the present method, the polymerising steps take place in a single reaction zone, under polymerising conditions in which the catalysts producing the polymer components are simultaneously active.

Many known procedures for forming multimodal polyolefins have employed a different reactor for forming each component. The methods of the present invention are particularly advantageous, since they allow for the production of improved olefin polymers from a single reactor. This is because the catalysts employed in the present invention are more effective than known catalysts, particularly when utilised simultaneously in the same reactor. This has two distinct advantages. Firstly, since only a single reactor is required, production costs are reduced. Secondly, since the components are all formed simultaneously, they are much more homogeneously blended than when produced separately.

Although polymerisation in a single reactor is particularly preferred, the catalysts employed in the present invention are still particularly effective in producing the required polyolefin components of a multimodal product even when these components are produced in separate reactors. Accordingly, in some embodiments, separate reactors may be employed for forming some or all of the components, if desired.

Although the invention may be applied to any olefin polymerisation, the olefin monomer employed typically comprises ethylene and/or propylene. Bimodal or multimodal polyethylene is the most preferred product.

The catalyst systems employed in the present invention may be employed in any type of co-polymerisation method, provided that the required catalytic activity is not impaired. In a preferred embodiment of the present invention, the catalyst system is employed in a slurry process, which is heterogeneous. Preferred supports include a porous solid support such as talc, inorganic oxides and resinous support materials such as polyolefin. Preferably, the support material is an inorganic oxide in its finely divided form.

Suitable inorganic oxide materials are well known in the art. Preferably, the support is a silica support having a surface area of from 200-700 m²/g and a pore volume of from 0.5-3 ml/g.

The amount of activating agent and catalyst component usefully employed in the preparation of the supported catalyst system can vary over a wide range and depend upon the nature of the activating agent.

The order of addition of the catalyst components and activating agent to the support material can vary.
Preferably, the support material is slurried in toluene and the catalyst components and activating agent are dissolved in toluene prior to addition to the support material.

The present invention also provides an olefin polymer, obtainable according to a method as defined above. The most preferred polymer obtainable according to the present invention is high density polyethylene (HDPE).

Also provided is the use of a dual catalyst system for producing an olefin polymer.

Resins having a bimodal molecular weight distribution can be used in high density, blown film, application where they offer an attractive combination of rheological properties in terms of shear response, low die swell, and high melt strength and of physico- mechanical properties such as clarity/low gel, tear strength, Environmental Stress Crack Resistance (ESCR). They further offer a good compromise of stiffness and impact resistance. These high-density polyethylene (HDPE) films are easy to process and allow down gauging and cost saving measures.

Blow moulding grades have excellent processing capabilities because of their low die swell and high melt strength. They also have good mechanical properties in terms of stiffness and ESCR. The containers prepared with the resins of the present invention can thus have thin walls, thereby requiring less material, and yet evince the resins having the best combination of top-load and ESCR.

Pressure pipe for natural gas and drinking water distribution, is another fast growing application for bimodal HDPE. The performance criteria for pressure pipes are processability during the extrusion through annular dies as well as short and long term performance properties requiring resistance to environmental (chemical and mechanical) stress ESCR, Slow Crack Growth (SCG), and Rapid Crack Propagation (RCP). They must compete with incumbent materials such as concrete and steel having long service lives of over 50 years.

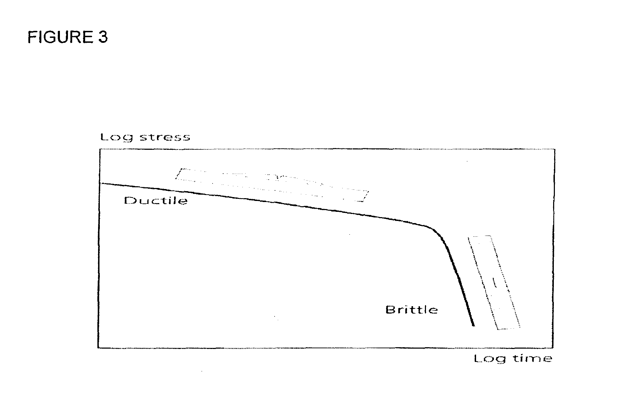

High performance pipes produced with the bimodal resin according to the present invention have the ability to resist short and long term failure mechanism such as growth of an incidental crack in the pipe over long periods of time under constant pressure (SCG), and resistance to RCP as a results of impact of a sharp object (impact failure). Additionally and most importantly, they exhibit high creep rupture strength (high modulus, high stiffness). The service lifetime is estimated via Long-Term Hydrostatic Strength (LTHS) that is determined by Minimum Required Stress (MRS) tests. These tests require a series of pressure/ failure time curves established at different temperatures with a number of pipes having prescribed length, diameter and wall thickness. Calculations and extrapolations are then carried out following the method developed by Schulte (U. Schulte in 100 Jahre Lebensdauer; Kunststoffe, 87, p. 203, 1997.), and a Hooks stress/ service time curve of well over 50 years at 20°C is obtained. The curve, represented in Figure 3, exhibits three distinct regions. After a short experiment time, a flat region in which at high stress the tested pipes failed in a ductile mode. After a very long experiment time, another region characterised by a very steep descent, during which the tested pipes, via a thermo-oxidative initiated change, failed in brittle mode. In between, there is a less pronounced intermediate region characterized by a ductile/ brittle transition "knee". According to current results, metallocene based PE100 resin with ideal balance in fractional polymer properties has service life times of over a century. The classification PE100 is based on MRS at a temperature of 80°C, a pressure of 5 Mpa for a period of time of 10OOh according to the method of the ISO norm TR 9080.

## Claims

1. A catalyst system for producing polyolefins comprising:
A. a Ziegler-Natta catalyst component;
B. one or more metallocene or new single site components;
C. an actvating agent having an ionising action for the metallocene catalyst component, having a low or no co-ordinating capability and having no poisoning action on the Ziegler-Natta component.

2. The catalyst system of claim 1 wherein the Ziegler-Natta catalyst component consists of a transition metal component A which is the reaction product of an organomagnesium compound with a titanium compound, and an organoaluminium component B.

3. The catalyst system according to claim 1 or claim 2 wherein the Ziegler-Natta catalyst component is prepared from a diether.

4. The catalyst system according to any one claims 1 to 3 wherein the metallocene catalyst component has a structure according to formula (I)
R" s (CpRₙ) (CpRₙ) M Q₂ (I)
or according to formula (II)
R"(CpRₙ) M X Q₂ (II)
wherein
- each Cp is a substituted or unsubstituted cyclopentadienyl ring;
- each R is the same or different and is hydrogen or a hydrocarbyl radical such as alkyl, alkenyl, aryl, alkylaryl or arylalkyl radical containing from 1 to 20 carbon atoms or two carbon atoms are joined together to form a C4-C6 ring;
- R" is a structural bridge between two Cp rings;
- M is a metal from group 4 of the Periodic Table;
- Q is a hydrocarbyl radical such as aryl, alkyl, alkenyl, alkylaryl or arylalkyl radical having from 1 to 20 carbon atoms, a hydrocarboxy radical having from 1 to 20 carbon atoms or a halogen and can be the same or different from each other;
- s is 0 or 1,
- X is an hetero atom ligand with one or two lone pair electrons and selected from the group 15 or 16, substituted or unsubstituted;
or new single site catalyst component of general formula III
(L) ₙM'(Q')p (III)
wherein L is an heteroatom-containing ligand, M' is selected from Ti, Zr, Sc, V, Cr, Fe, Co, Ni, Pd or a lanthanide metal, each Q is independently a hydrocarbon having from 1 to 20 carbon atoms or a halogen, p is the valence of M' minus the coordination number of L.

5. The catalyst system according to claim 4 wherein the metallocene-based component has at most two substituents on each cyclopentadienyl.

6. The catalyst system according to claim 4 or claim 5 wherein the position of substiutents on the metallocene-based component is 3- and/or 5- for a cyclopentadienyl-type group, 3- and/or 6- for a fluorenyl-type group and 2- and/or 4- for an indenyl-type group.

7. The catalyst system according to any one of claims 4 to 6 wherein the bridge in the metallocene-based catalyst component is Et or Me₂Si.

8. The catalyst system according to any one of claims 4 to 6 wherein the metallocene catalyst component is unbridged.

9. The catalyst system according to any one of claims claims 4 to 8 wherein Q is chlorine.

10. The catalyst system according to any one of claims 4 to 9 wherein X in the metallocene-based catalyst component is nitrogen, phosphorus, oxygen or sulfur.

11. The catalyst system according to any one of claims 4 to 10 wherein the one or more metallocene catalyst component is based on hafnium.

12. The catalyst system according to claim 4 wherein the one or more metallocene catalyst component is a constrained geometry titanocene.

13. The catalyst system according to any one claims 4 wherein the new single site catalyst component is a nickel complex.

14. The catalyst system according to any one of the preceding claims wherein the activating agent is a borate, a boronate or an aluminate.

15. The catalyst system of any one according to any one of the preceding claims further comprising a cocatalyst.

16. The catalyst system according to any one of the preceding claims wherein the additional cocatalyst is an aluminium alkyl.

17. A process for preparing the catalyst system of any one of claims 1 to 16 comprising the steps of
i. providing a first Ziegler-Natta catalyst component;
ii. providing one or more metallocene or new single site catalyst components;
iii. providing an activating agent having an ionising action and capable of activating the one or more metallocene catalyst component(s), said activating agent being based on a spherically shaped anionogenic agent that can distribute the negative charge evenly and that has a low or no co-ordinating capability and said activating agent and said Ziegler-Natta component of step i having no mutual poisoning action;
iv. optionally providing an inorganic support.

18. The process of claim 17 wherein the activating agent is a boronate, borate or aluminate.

19. A process for preparing polyolefins comprising the steps of:
A. introducing into the reactor a catalyst system according to any one of claims 1 to 16;
B. optionally injecting a cocatalyst into the reactor;
C. injecting into the reaction zone an olefin monomer and an optional co-monomer;
D. maintaining the reaction zone under polymerisation conditions;
E. extracting the desired polyolefin.

20. The process of claim 19 comprising the additional step of pre-polymerisation prior to polymerisation step D).

21. The process of claim 19 or claim 20 wherein the polyolefin is polyethylene or polypropylene.

22. The process of any one of claims 19 to 21 wherein the comonomer is selected from octene, 3-methyl-1-pentene or 4-methyl-1-pentene.

23. Polyolefins obtainable by the process of any one of claims 19 to 22.
